(19) **Europäisches Patentamt**
**European Patent Office**
**Office européen des brevets**

(11) **EP 4 585 892 A1**

(12) **EUROPEAN PATENT APPLICATION**
published in accordance with Art. 153(4) EPC

(43) Date of publication:
**16.07.2025 Bulletin 2025/29**

(51) International Patent Classification (IPC):
**G01L 5/165** (2020.01)        **G01L 1/14** (2006.01)
**G01L 5/00** (2006.01)

(21) Application number: **23911413.5**

(22) Date of filing: **13.11.2023**

(52) Cooperative Patent Classification (CPC):
**G01L 1/14; G01L 5/00; G01L 5/165**

(86) International application number:
**PCT/JP2023/040782**

(87) International publication number:
**WO 2024/142630 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.12.2022   JP 2022208016**

(71) Applicant: **NISSHA CO., LTD.**
**Kyoto-shi, Kyoto 604-8551 (JP)**

(72) Inventors:
• **HITOMI, Kentaroh**
  **Kyoto-shi, Kyoto 604-8551 (JP)**
• **WATAZU, Yuji**
  **Kyoto-shi, Kyoto 604-8551 (JP)**

(74) Representative: **Winter, Brandl - Partnerschaft
mbB
Alois-Steinecker-Straße 22
85354 Freising (DE)**

(54) **STRESS SENSOR AND STRESS DETECTION SHEET**

(57)    [Problem] To provide a stress sensor in which the number of wiring lines of the stress sensor can be significantly reduced even when the size of the stress sensor is increased, while maintaining a detection resolution, thus facilitating the increase in size.

[Solution] In a stress sensor 1, a second electrode layer 3 includes M first grooves 35 extending in a first direction, and M second grooves 36 extending in a second direction intersecting the first direction in each row between a first column electrode 31 and a second column electrode 32 in each pair. The first row electrode 21 in each pair overlaps the first grooves 35 in N columns. The second row electrode 22 in each pair overlaps the second grooves 36 in the N columns. A detection circuit 5 drives N pairs of first column electrodes 31 and second column electrodes 32 at different timings for each electrode.

FIG. 6

EP 4 585 892 A1

## Description

Technical Field

The present invention relates to a stress sensor for detecting stress, and more particularly to a stress sensor for detecting shear stress and compressive stress.

Background Art

In known art, for example, there is a stress sensor that uses a sheet, as described in Patent Literature 1 (JP 6699954 B). The stress sensor detects compressive stress (a pressing force), using the fact that an elastic body inside the stress sensor is compressed by a pressure in a normal direction with respect to the sheet surface. Further, the stress sensor can detect the shear stress generated in two different directions (an X direction and a Y direction) in an in-plane direction with respect to the sheet surface.

Citation List

Patent Literature

Patent Literature 1: JP 6699954 B

Summary of Invention

Technical Problem

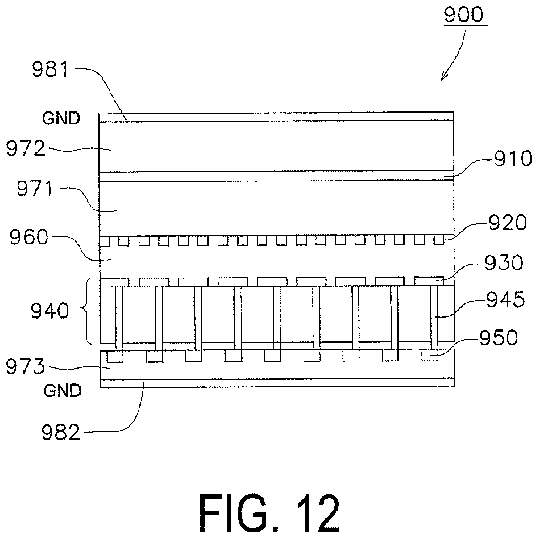

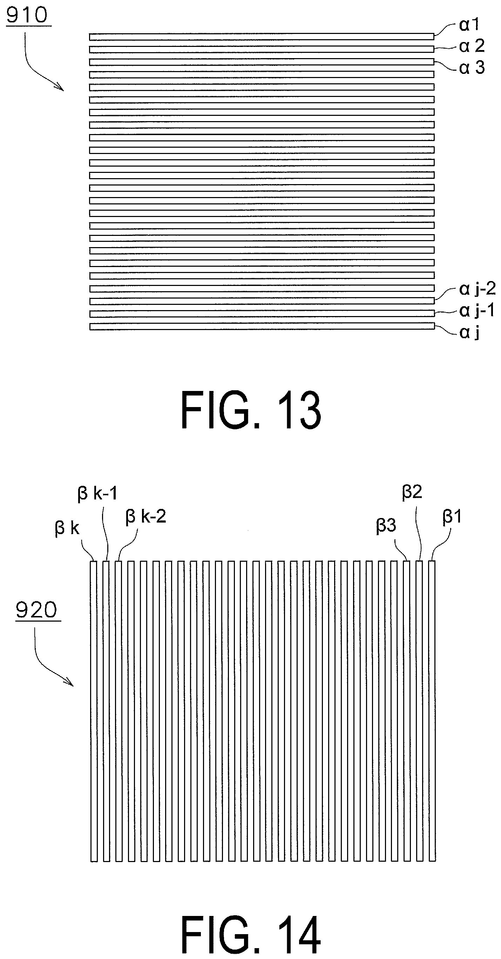

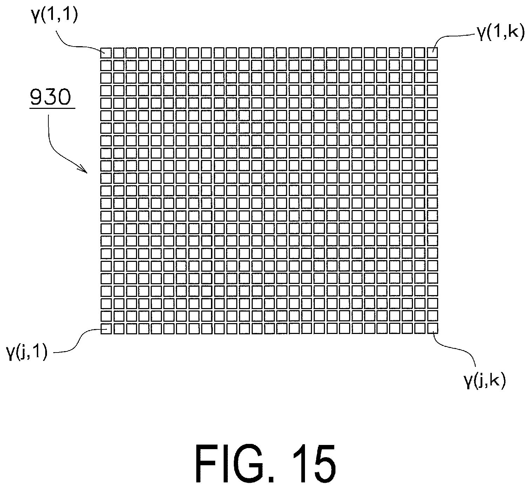

FIG. 12 illustrates a basic cross-sectional configuration of a detection sheet of a known stress sensor that can detect shear stress in two directions and can detect compressive stress, as described in Patent Document 1. A detection sheet 900 of the known stress sensor illustrated in FIG. 12 includes j first strip electrodes 910 illustrated in FIG. 13, k second strip electrodes 920 illustrated in FIG. 14, and j × k segment electrodes 930 illustrated in FIG. 15. Grooves 935 are formed between the segment electrodes 930 adjacent to each other.

When viewed in detail in consideration of an arrangement thereof, the first strip electrodes 910 can be classified into the j electrodes from a first strip electrode $\alpha$1 arranged in a first row to a first strip electrode $\alpha$j arranged in a j-th row. When viewed in detail in consideration of an arrangement thereof, the second strip electrodes 920 can be classified into the k electrodes from a second strip electrode $\beta$1 arranged in a first column to a second strip electrode $\beta$k arranged in a k-th column. Further, when viewed in detail in consideration of an arrangement thereof, the segment electrodes 930 can be classified into the j × k electrodes from a segment electrode $\gamma$(1, 1) arranged in the first row and the first column to a segment electrode $\gamma$(j, k) arranged in the j-th row and k-th column.

The j × k segment electrodes 930 are formed on a flexible wiring line substrate 940. The flexible wiring line substrate 940 is provided with j × k through holes 945 connected to the j × k segment electrodes 930. The j × k through holes 945 are connected to j × k wiring lines 950 for connection to an external circuit.

An elastic body 960 is disposed between the segment electrodes 930 and the second strip electrodes 920. When a force is applied to the detection sheet 900 of the known stress sensor from the outside, the elastic body 960 deforms. When the elastic body 960 deforms, electrostatic capacitances change between the first strip electrodes 910 and the segment electrodes 930, and between the second strip electrodes 920 and the segment electrodes 930. Based on the changes in the electrostatic capacitance, the shear stress and the compressive stress can be detected. Note that an insulating film 971 is disposed between the first strip electrodes 910 and the second strip electrodes 920 in order to insulate the first strip electrodes 910 and the second strip electrodes 920 from each other. Conducting films 981 and 982 connected to a common potential GND are disposed on a front surface and a back surface of the detection sheet 900 of the stress sensor, in order to reduce the influence of an external electric field. For insulation, an insulating film 972 is disposed between the conducting film 981 and the first strip electrodes 910, and an insulating film 973 is disposed between the conducting film 982 and the wiring lines 950.

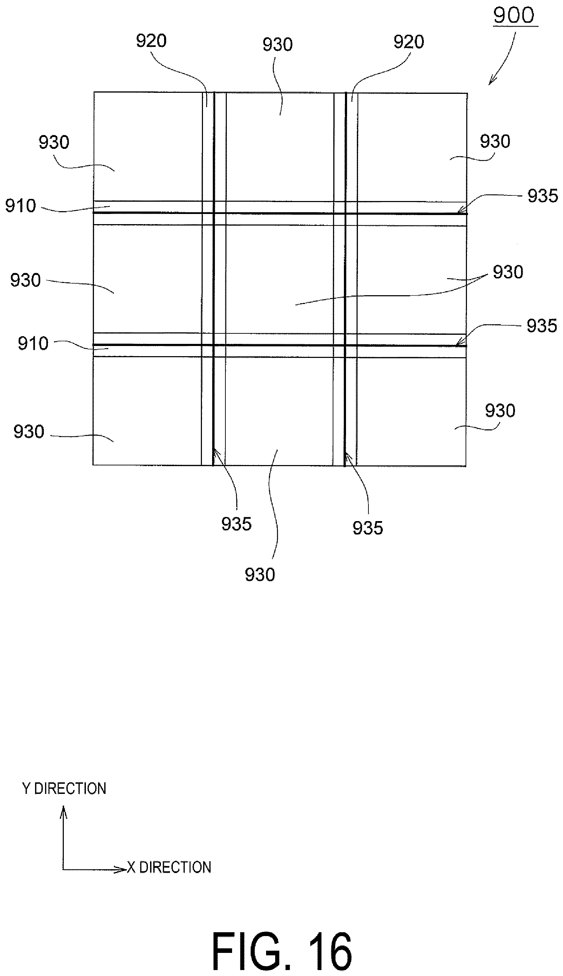

In this type of configuration of the detection sheet 900 of the known stress sensor, for example, detection of the shear stress in two rows and two columns requires nine of the segment electrodes 930 arranged in three rows and three columns, two of the first strip electrodes 910, and two of the second strip electrodes 920, as illustrated in FIG. 16. When the detection sheet 900 illustrated in FIG. 16 is used, the shear stress in the X direction and the shear stress in the Y direction can be detected in the two rows and the two columns.

As described above, in the detection sheet 900 of the known stress sensor, the compressive stress and the shear stress can be detected at a large number of locations using the large number of segment electrodes 930 arranged in the matrix shape, and the first strip electrodes 910 and second strip electrodes 920.

However, connecting the j × k segment electrodes 930 to the external circuit requires the j × k wiring lines 950. Further, the flexible wiring line substrate 940 in which the through holes 945 can be formed is required in order to connect the wiring lines 950 and the segment electrodes 930.

**In** the known stress sensor including the detection sheet 900 as illustrated in FIG. 12, it is difficult to increase the size of the detection sheet 900, while maintaining a detection resolution, without increasing the number of wiring lines. When the size of the detection sheet 900 is increased while maintaining the detection resolution, the number of the segment electrodes 930 increases and the number of the wiring lines 950 increases. When the number of wiring lines 950 increases, a number of connector pins of the external circuit for connecting to the flexible wiring line substrate 940 also increases, and attaching and detaching the detection sheet 900 to and from the external circuit becomes difficult. In addition, when the size of the detection sheet 900 is increased, the size of the flexible wiring line substrate 940 used in the detection sheet 900 is also increased, and the flexible wiring line substrate 940 becomes more expensive.

An issue of the present invention is to provide a stress sensor in which a number of wiring lines of the stress sensor can be significantly reduced, even when the size of the stress sensor is increased while maintaining a detection resolution, thus facilitating the increase in size.

Solution to Problem

A plurality of aspects will be described below as means to solve the problems. These aspects can be combined as desired, as necessary.

A stress sensor according to an aspect of the present invention includes a first electrode layer and a second electrode layer, an insulating elastic body layer, and a detection circuit. The first electrode layer and the second electrode layer overlap M × N detection areas for performing detection separately in M rows and N columns (where M and N are integers equal to or greater than 2). The first electrode layer and the second electrode layer face each other. The insulating elastic body layer is disposed between the first electrode layer and the second electrode layer to electrically insulate the first electrode layer and the second electrode layer from each other, and is made of an elastically deformable material. The detection circuit is connected to the first electrode layer and the second electrode layer. The first electrode layer includes M pairs of first row electrodes and second row electrodes, which extend over the N columns and are insulated from each other, and M first row wiring lines and M second row wiring lines connecting the M pairs of the first row electrodes and the second row electrodes to the detection circuit. The second electrode layer includes N pairs of first column electrodes and second column electrodes, which extend over the M rows and are insulated from each other, and N first column wiring lines and N second column wiring lines connecting the N pairs of the first column electrodes and the second column electrodes to the detection circuit. Between the first column electrode and the second column electrode in each pair, the second electrode layer includes M first grooves extending in a first direction, and M second grooves extending in a second direction intersecting the first direction in each row. The first row electrode in each pair is arranged so as to overlap the first grooves in the N columns. The second row electrode in each pair is arranged so as to overlap the second grooves in the N columns. The detection circuit is configured to, by driving the N pairs of the first column electrodes and the second column electrodes at different timings for each electrode, detect a shear stress orthogonal to the first direction in the first grooves arranged in the M rows and N columns, detect a shear stress orthogonal to the second direction in the second grooves arranged in the M rows and the N columns, and detect a pressing force in the M rows and N columns at which the M pairs of the first row electrodes and the second row electrodes and the N pairs of the first column electrodes and the second column electrodes intersect each other.

In the stress sensor having such a configuration, by providing the M first row wiring lines and the M second row wiring lines and the N first column wiring lines and the N second column wiring lines, it is possible to greatly reduce the number of wiring lines for wiring to enable the detection of the shear stress in the first direction and the second direction, and the compressive stress, at the M rows and N columns.

The above-described stress sensor can be configured such that the first row electrodes and the second row electrodes, and the first row wiring lines and the second row wiring lines are made of the same member disposed on the same plane, and the first column electrodes and the second column electrodes, and the first column wiring lines and the second column wiring lines are made of the same member disposed on the same plane. In the stress sensor configured as described above, for example, a detection sheet including the first row electrode and the second row electrode, the first row wiring line and the second row wiring line, the first column electrode and the second column electrode, and the first column wiring line and the second column wiring line can be made thinner. Further, since distances between the electrodes arranged in the rows and columns are equal to each other, it is possible to eliminate a difference in sensitivity with respect to the shear stress in the first direction and the shear stress in the second direction that may be caused by a difference in the distances between the electrodes.

**In** the above-described stress sensor, in each of the first row electrodes, compared to a plurality of stress detection portions overlapping the first grooves, a connection portion between the stress detection portions adjacent to each other is thinner. The stress sensor configured in this manner can suppress cross-axis interference compared to a case in which the connection portion is not thin.

The above-described stress sensor can be configured such that each of the first row electrodes overlaps the first grooves at a plurality of locations in each of the detection areas. **In** the stress sensor configured as described above, the cross-axis interference is less likely to occur, compared to a case in which the first row electrode and the first groove overlap each other at only one location.

The above-described stress sensor can be configured such that each of the second row electrodes overlaps the second grooves at a plurality of locations in each of the detection areas. In the stress sensor configured as described above, the cross-axis interference is less likely to occur, compared to a case in which the second row electrode and the second groove overlap each other at only one location.

The above-described stress sensor can be configured to include, on a front surface thereof, an elastic layer having elasticity and overlapping the M × N detection areas. In the stress sensor configured as described above, the elastic layer disperses the stress, and the cross-axis interference is less likely to occur.

The above-described stress sensor can be configured to include, on a back surface thereof, a silicone film overlapping the M × N detection areas. In the stress sensor configured as described above, for example, the detection sheet including the detection areas does not slip due to the silicone film on the back surface, and the shear stress can be easily measured.

A stress detection sheet according to an aspect of the present invention includes a first electrode layer, a second electrode layer, and an insulating elastic body layer. The first electrode layer and the second electrode layer overlap M × N detection areas for performing detection separately in M rows and N columns (where M and N are integers equal to or greater than 2). The first electrode layer and the second electrode layer face each other. The insulating elastic body layer is disposed between the first electrode layer and the second electrode layer to electrically insulate the first electrode layer and the second electrode layer from each other, and is made of an elastically deformable material. The first electrode layer includes M pairs of first row electrodes and second row electrodes, which extend over the N columns and are insulated from each other, and M first row wiring lines and M second row wiring lines for connecting the M pairs of the first row electrodes and the second row electrodes to a circuit outside the stress detection sheet. The second electrode layer includes N pairs of first column electrodes and second column electrodes, which extend over the M rows and are insulated from each other, and N first column wiring lines and N second column wiring lines for connecting the N pairs of the first column electrodes and the second column electrodes to the circuit outside the stress detection sheet. Between the first column electrode and the second column electrode in each pair, the second electrode layer includes M first grooves extending in a first direction, and M second grooves extending in a second direction intersecting the first direction in each row. The first row electrode in each pair is arranged so as to overlap the first grooves in the N columns. The second row electrode in each pair is arranged so as to overlap the second grooves in the N columns.

In the stress detection sheet having such a configuration, by providing the M first row wiring lines and the M second row wiring lines, and the N first column wiring lines and the N second column wiring lines, it is possible to significantly reduce the number of wiring lines for wiring to enable the detection of a shear stress in the first direction, a shear stress in the second direction, and a compressive force, in the M rows and N columns.

Advantageous Effects of Invention

According to the stress sensor according to the present invention, the number of wiring lines can be significantly reduced even when the size of the stress sensor is increased, while maintaining a detection resolution. This facilitates the increase in size.

Brief Description of Drawings

FIG. 1 is a conceptual view illustrating a configuration example of a stress sensor according to the present invention.
FIG. 2 is a plan view illustrating a basic configuration example of a first electrode layer and a second electrode layer of four rows and four columns, according to a first embodiment.
FIG. 3 is a flowchart for describing a basic procedure for measuring electrostatic capacitance of a detection circuit.
FIG. 4 is a plan view schematically illustrating capacitors in each of detection areas related to the measurement of the electrostatic capacitance according to the first embodiment.
FIG. 5 is a schematic cross-sectional view illustrating a cross-sectional configuration of a detection sheet of the stress sensor according to the first embodiment.
FIG. 6 is a conceptual view illustrating a configuration example of the stress sensor according to a second embodiment.

FIG. 7 is a plan view illustrating a configuration of the first electrode layer illustrated in FIG. 6.

FIG. 8 is a plan view illustrating a configuration of the second electrode layer illustrated in FIG. 6.

FIG. 9 is a plan view schematically illustrating capacitors in each of the detection areas related to the measurement of the electrostatic capacitance according to the second embodiment.

FIG. 10 is a schematic cross-sectional view of a cross-sectional configuration of the detection sheet of the stress sensor according to the second embodiment.

FIG. 11 is a schematic plan view illustrating a configuration example of the detection sheet of the stress sensor according to a third embodiment.

FIG. 12 is a schematic cross-sectional view illustrating a cross-sectional configuration of a detection sheet of a known stress sensor.

FIG. 13 is a plan view illustrating first strip electrodes of the detection sheet of the known stress sensor.

FIG. 14 is a plan view illustrating first strip electrodes of the detection sheet of the known stress sensor.

FIG. 15 is a plan view illustrating segment electrodes of the detection sheet of the known stress sensor.

FIG. 16 is a schematic plan view for describing a configuration of the known detection sheet that detects a shear stress in an X direction and a shear stress in a Y direction, in two rows and two columns, and detects a pressing force applied to each of the segment electrodes.

Description of Embodiments

First Embodiment

(1) Basic Configuration of Stress Sensor

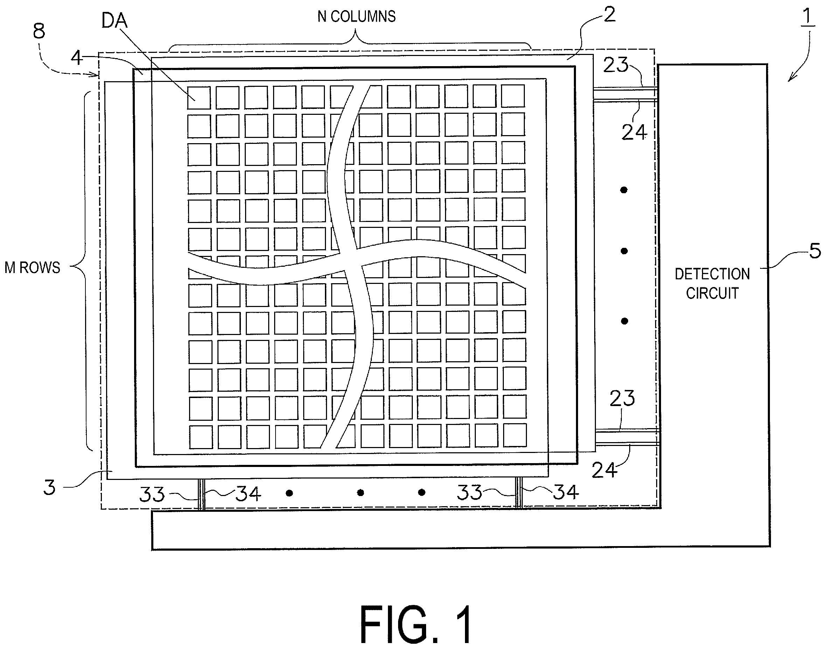

FIG. 1 schematically illustrates a basic configuration of a stress sensor 1 according to a first embodiment. As illustrated in FIG. 1, the stress sensor 1 includes a first electrode layer 2, a second electrode layer 3, an insulating elastic body layer 4, and a detection circuit 5. In FIG. 1, in order to make the first electrode layer 2, the second electrode layer 3, and the insulating elastic body layer 4 easily distinguishable from each other, the first electrode layer 2, the second electrode layer 3, and the insulating elastic body layer 4 are illustrated so as to be shifted with respect to each other, unlike in an actual structure.

The stress sensor 1 has M $\times$ N detection areas DA that perform detection separately in M rows and N columns (where M and N are integers equal to or greater than 2). In the stress sensor 1, stress can be individually detected in each of the detection areas DA. In other words, a pressing force (compressive stress) can be detected at M $\times$ N locations, shear stress in a first direction can be detected at the M $\times$ N locations, and shear stress in a second direction can be detected at the M $\times$ N locations. The portion of the stress sensor 1 illustrated in FIG. 1 other than the detection circuit 5 is a stress detection sheet 8.

The first electrode layer 2 includes M first row wiring lines 23 and M second row wiring lines 24 for connection to the detection circuit 5. In FIG. 1, the first row wiring line 23 and the second row wiring line 24 in a first row and the first row wiring line 23 and the second row wiring line 24 in an M-th row are illustrated, and the first row wiring lines 23 and the second row wiring lines 24 in the other rows are not illustrated.

The second electrode layer 3 includes N first column wiring lines 33 and N second column wiring lines 34 for connection to the detection circuit 5. In FIG. 1, the first column wiring line 33 and the second column wiring line 34 in a first column and the first column wiring line 33 and the second column wiring line 34 in an N-th column are illustrated, and the first column wiring lines 33 and the second column wiring lines 34 in the other columns are not illustrated.

The insulating elastic body layer 4 is made of an elastically deformable material having insulating properties. The insulating elastic body layer 4 is present between the first electrode layer 2 and the second electrode layer 3, and electrically insulates the first electrode layer 2 and the second electrode layer 3 from each other.

(2) Basic Configuration of Each Detection Area

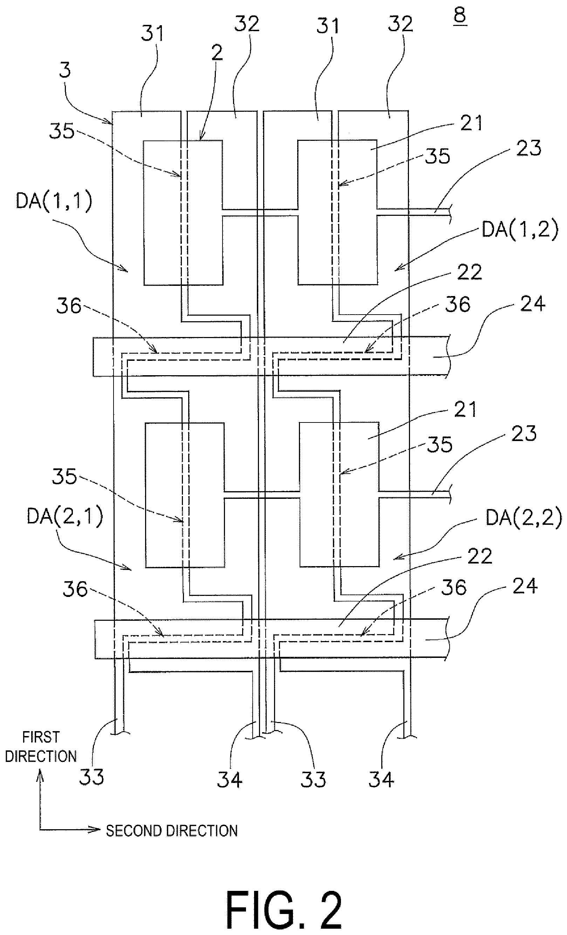

FIG. 2 illustrates an example of a basic configuration of the first electrode layer 2 and the second electrode layer 3 in four rows and four columns. FIG. 2 illustrates the configuration of the first electrode layer 2 and the second electrode layer 3 when the stress detection sheet 8 on which the detection areas DA are disposed is viewed from a front surface side. In FIG. 2, only the configurations of the first electrode layer 2 and the second electrode layer 3 of the stress detection sheet 8 are illustrated, and other configurations, such as that of the insulating elastic body layer 4, are not illustrated.

The first electrode layer 2 includes two pairs of a first row electrode 21 and a second row electrode 22, which extend over two columns and are insulated from each other. The first electrode layer 2 includes two first row wiring lines 23 and two second row wiring lines 24 that connect the two pairs of the first row electrode 21 and the second row electrode 22 to the detection circuit 5.

The second electrode layer 3 includes two pairs of a first column electrode 31 and a second column electrode 32, which extend over two rows and are insulated from each other. The second electrode layer 3 includes two first column wiring lines 33 and two second column wiring lines 34 that connect the two pairs of the first column electrode 31 and the second column electrode 32 to the detection circuit 5.

In the second electrode layer 3, in each row, each of the pairs of the first column electrode 31 and the second column electrode 32 has two first grooves 35 extending in the first direction and two second grooves 36 extending in the second direction intersecting the first direction.

The first row electrode 21 of each of the pairs is disposed so as to overlap the first grooves 35 in two columns. The second row electrode 22 of each of the pairs is disposed so as to overlap the second grooves 36 in two columns. Note that, although a groove overlapping the second row electrode 22 has a portion slightly extending in the first direction, the second groove 36 is a portion other than such a portion extending in the first direction.

In FIG. 2, the detection area DA arranged in the first row and first column is a detection area DA(1, 1), the detection area DA arranged in the second row and first column is a detection area DA(2, 1), the detection area DA arranged in the first row and second column is a detection area DA(1, 2), and the detection area DA arranged in the second row and second column is a detection area DA(2, 2).

(3) Detection of Stress in Detection Circuit

The detection circuit 5 drives the two pairs of the first column electrode 31 and the second column electrode 32 at different timings for each of the electrodes. In other words, the first column electrode 31 and the second column electrode 32 are drive electrodes, and the first row electrode 21 and the second row electrode 22 are sensing electrodes.

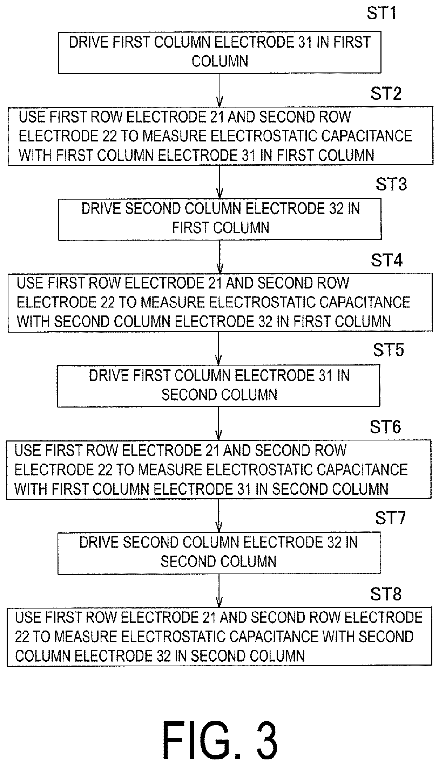

As illustrated in FIG. 3, the detection circuit 5 first drives the first column electrode 31 in the first column (step ST1). Then, the detection circuit 5 uses the first row electrode 21 and the second row electrode 22 in the first row to measure the electrostatic capacitances between the first row electrode 21 and the second row electrode 22 in the first row, and the first column electrode 31 in the first column, and uses the first row electrode 21 and the second row electrode 22 in the second row to measure the electrostatic capacitances between the first row electrode 21 and the second row electrode 22 in the second row, and the first column electrode 31 in the first column (step ST2). The detection circuit 5 drives the second column electrode 32 in the first column (step ST3). Then, the detection circuit 5 uses the first row electrode 21 and the second row electrode 22 in the first row to measure the electrostatic capacitances between the first row electrode 21 and the second row electrode 22 in the first row, and the second column electrode 32 in the first column, and uses the first row electrode 21 and the second row electrode 22 in the second row to measure the electrostatic capacitances between the first row electrode 21 and second row electrode 22 in the second row, and the second column electrode 32 in the first column (step ST4). Using measurement results of the electrostatic capacitances related to the first column at steps ST1 to ST4, the detection circuit 5 detects the shear stress in the first direction, the shear stress in the second direction, and the pressing force in the first row and first column and in the second row and first column. In other words, at steps ST1 to ST4, the shear stress in the first direction, the shear stress in the second direction, and the pressing force are detected in the detection areas DA(1, 1) and DA(2, 1).

Next, the detection circuit 5 drives the first column electrode 31 in the second column (step ST5). Then, the detection circuit 5 uses the first row electrode 21 and the second row electrode 22 in the first row to measure the electrostatic capacitances between the first row electrode 21 and the second row electrode 22 in the first row, and the first column electrode 31 in the second column, and uses the first row electrode 21 and the second row electrode 22 in the second row to measure the electrostatic capacitances between the first row electrode 21 and the second row electrode 22 in the second row, and the first column electrode 31 in the second column (step ST6). The detection circuit 5 drives the second column electrode 32 in the second column (step ST7). Then, the detection circuit 5 uses the first row electrode 21 and the second row electrode 22 in the first row to measure the electrostatic capacitances between the first row electrode 21 and the second row electrode 22 in the first row, and the second column electrode 32 in the second column, and uses the first row electrode 21 and second row electrode 22 in the second row to measure the electrostatic capacitances between the first row electrode 21 and the second row electrode 22 in the second row, and the second column electrode 32 in the second column (step ST8). Using measurement results of the electrostatic capacitances related to the second column at steps ST5 to ST8, the detection circuit 5 detects the shear stress in the first direction, the shear stress in the second direction, and the pressing force in the first row and second column and in the second row and second column. In other words, at steps ST5 to ST8, the shear stress in the first direction, the shear stress in the second direction, and the pressing force are detected in the detection areas DA(1, 2) and DA(2, 2).

Note that, in the detection of the shear stress in the first direction, the shear stress in the second direction, and the pressing force, the stress sensor 1 performs calibration for measuring the electrostatic capacitances in a state in which no stress is applied, before performing the detection.

(4) Calculation for Detection of Stress

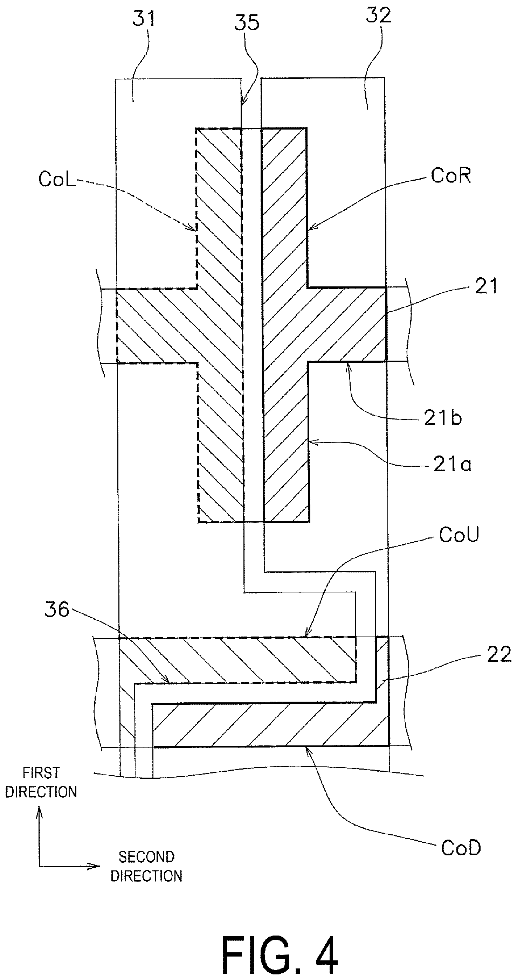

Next, the detection of the shear stress in the first direction, the shear stress in the second direction, and the pressing force in each of the detection areas DA will be described with reference to FIG. 4. In FIG. 4, four capacitors CoR, CoL, CoU, and CoD formed in the one detection area DA are illustrated using oblique lines. The capacitor CoL is constituted by an overlapping portion of the first row electrode 21 and the first column electrode 31. The capacitor CoR is constituted by an overlapping portion of the first row electrode 21 and the second column electrode 32. The capacitor CoU is constituted by an overlapping portion of the second row electrode 22 and the first column electrode 31. The capacitor CoD is constituted by an overlapping portion of the second row electrode 22 and the second column electrode 32.

When a load is applied, the electrostatic capacitances of the four capacitors CoR, CoL, CoU, and CoD are denoted by CR, CL, CU, and CD, respectively. The electrostatic capacitances of the capacitors CoR, CoL, CoU, and CoD when no load is applied are denoted by $CR_{BL}$, $CL_{BL}$, $CU_{BL}$, and $CD_{BL}$, respectively.

The electrostatic capacitance CL is an electrostatic capacitance generated between the first row electrode 21 and the first column electrode 31. The electrostatic capacitance CR is an electrostatic capacitance generated between the first row electrode 21 and the second column electrode 32. The electrostatic capacitance CU is an electrostatic capacitance generated between the second row electrode 22 and the first column electrode 31. The electrostatic capacitance CD is an electrostatic capacitance generated between the second row electrode 22 and the second column electrode 32.

Shear stresses F1 and F2 in the first and second directions and a compressive stress Fv in a direction perpendicular to the surface of the stress detection sheet 8 can be calculated using the following equations [1], [2] and [3], using constants K1, K2 and Kv, and using CU, CD, CL, and CR.

$$F1 = K1 \times \{CD/(CU + CD) - CD_{BL}/(CU_{BL} + CD_{BL})\} \cdots [1]$$

$$F2 = K2 \times \{CR/(CL + CR) - CR_{BL}/(CL_{BL} + CR_{BL})\} \cdots [2]$$

$$Fv = Kv \times \{(CL + CR + CU + CD)/(CL_{BL} + CR_{BL} + CU_{BL} + CD_{BL}) - 1\} \cdots [3]$$

When the above-described F1, F2, and Fv are rewritten using P1, P2, and Pv as below, equations [4], [5], and [6] are obtained.

$$P1 = CD/(CU + CD) - 1/2$$

$$P2 = CR/(CL + CR) - 1/2$$

$$Pv = CL + CR + CU + CD$$

$$F1 = K1 \times [P1 - P1_{BL}] \cdots [4]$$

$$F2 = K2 \times [P2 - P2_{BL}] \cdots [5]$$

$$Fv = Kv \times Pv/Pv_{BL} \cdots [6]$$

Note that the suffix BL indicates values of P1, P2, and Pv in a state in which the stress is not applied. K1 is a reciprocal of a gradient of a sensitivity curve [P1/F1], K2 is a reciprocal of a gradient of a sensitivity curve [P2/F2], and Kv is a reciprocal of a gradient of a sensitivity curve [Pv/Fv].

As illustrated in FIG. 4, in each of the first row electrodes 21, a connection portion 21b between stress detection portions 21a adjacent to each other is thinner than the stress detection portion 21a that overlaps the first groove 35. The stress detection portion 21a has a rectangular shape, and a long side thereof extends along the first groove 35. The width of the stress detection portion 21a is greater, compared to a case in which widths of the stress detection portion 21a and the connection portion 21b are equal to each other. As a result, a change in the electrostatic capacitance in response to a change in stress is larger, and it is thus easier to detect the stress. Further, since the width of the connection portion 21b is small, it is possible to suppress the occurrence of cross-axis interference. The cross-axis interference mentioned here is a phenomenon in which the stress of a detection target is affected by stress other than that of the detection target, and is, for example, a phenomenon in which the magnitude of a first shear stress changes depending on a magnitude of the compressive stress when detecting the first shear stress.

(5) Cross-sectional Configuration of Detection Sheet

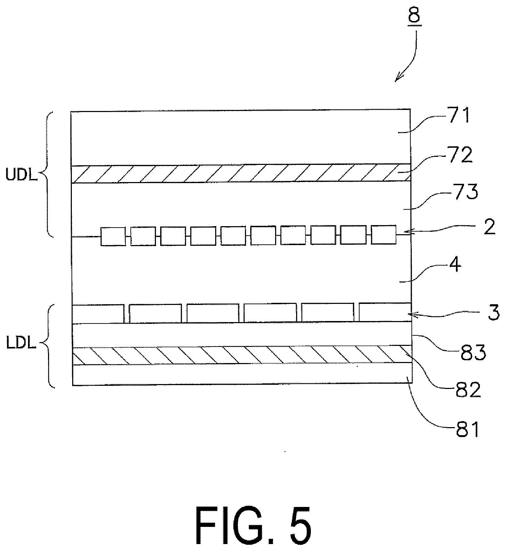

FIG. 5 illustrates an overview of a basic cross-sectional configuration of the stress detection sheet 8 of the stress sensor 1 according to the first embodiment. The stress detection sheet 8 includes an upper electrode layer UDL, a lower electrode layer LDL, and the insulating elastic body layer 4. The first electrode layer 2 is disposed on the insulating elastic body layer 4, and the second electrode layer 3 is disposed under the insulating elastic body layer 4. Specifically, for example, the first electrode layer 2 is bonded to the top surface of the insulating elastic body layer 4 using an adhesive, and the second electrode layer 3 is bonded to the lower surface of the insulating elastic body layer 4 using an adhesive. In other words, the insulating elastic body layer 4 is bonded to the upper electrode layer UDL and to the lower electrode layer LDL using the adhesive, so that the insulating elastic body layer 4 is sandwiched between the upper electrode layer UDL and the lower electrode layer LDL.

For example, a foam material is used as an elastically deformable material for the insulating elastic body layer 4.

In the upper electrode layer UDL, a protecting layer 71, a conducting layer 72, an insulating layer 73, and the first electrode layer 2 are provided in this order from the top. The protecting layer 71 and the insulating layer 73 are constituted by an insulating film, for example. An elastically deformable material capable of dispersing pressure is preferably used for the protecting layer 71. The conducting layer 72 and the first electrode layer 2 are constituted by a conductive adhesive (conductive paste), for example. The conducting layer 72 is connected to a common potential GND in order to reduce the influence of an external electric field.

In the lower electrode layer LDL, a protecting layer 81, a conducting layer 82, an insulating layer 83, and the second electrode layer 3 are provided in this order from the bottom. The protecting layer 81 and the insulating layer 83 are constituted by an insulating film, for example. As the protecting layer 81, for example, it is preferable to use a non-slip sheet having non-slip properties, made of a silicone-based resin, an acrylic resin, an acrylic silicone-based resin, or rubber. The conducting layer 82 and the second electrode layer 3 are constituted by a conductive adhesive (conductive paste), for example. The conducting layer 82 is connected to the common potential GND in order to reduce the influence of an external electric field.

Second Embodiment

(6) Overall Configuration of Stress Sensor

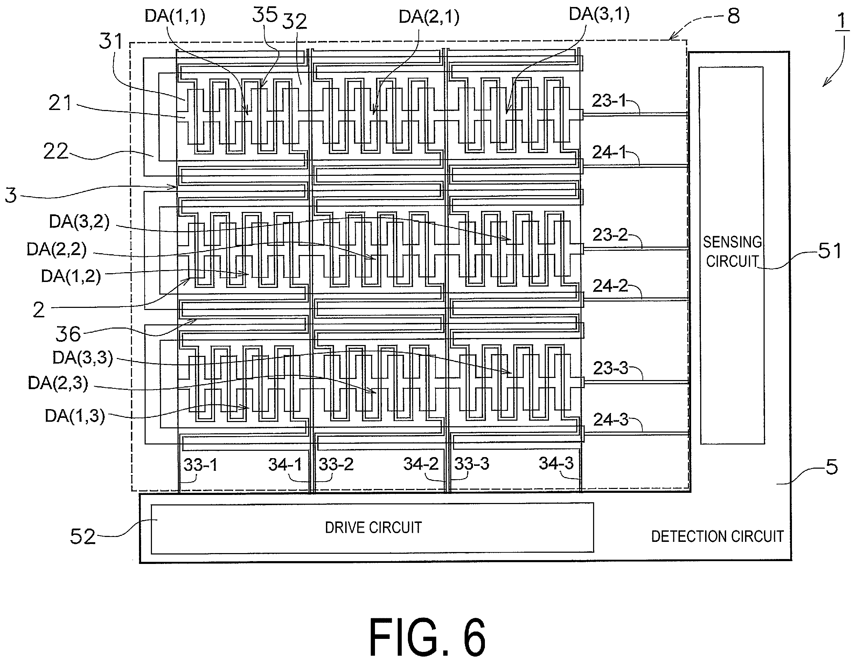

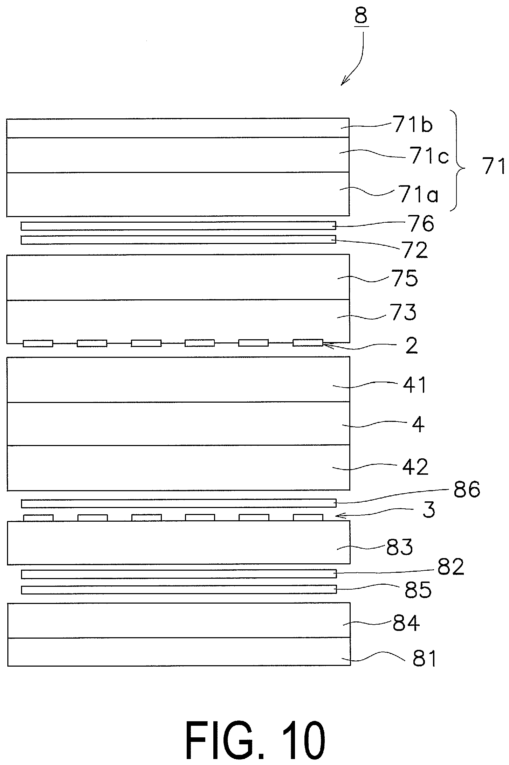

FIG. 6 illustrates an overview of an entire configuration of the stress sensor 1 according to a second embodiment. As illustrated in FIG. 6, the stress sensor 1 includes the first electrode layer 2, the second electrode layer 3, and the detection circuit 5. Although the insulating elastic body layer 4 is not illustrated in FIG. 6, the stress sensor 1 illustrated in FIG. 6 also includes the insulating elastic body layer 4, as in the stress sensor 1 illustrated in FIG. 1 (see FIG. 10).

The stress sensor 1 illustrated in FIG. 6 has nine of the detection areas DA for detection over three rows and three columns. When the detection areas DA are distinguished from each other depending on the location at which they are arranged, the detection areas DA are displayed with an indication of the row and column appended thereto. For example, the detection area of the M-th row and N-th column is denoted by a reference sign "DA(M, N)". For example, the detection area DA(2, 2) is the detection area arranged in the second row and second column. In the detection area DA(2, 2), the pressing force (compressive stress), the shear stress in the first direction, and the shear stress in the second direction can be detected in the second row and second column. A portion of the stress sensor 1 illustrated in FIG. 6 other than the detection circuit 5 is the stress detection sheet 8.

The detection circuit 5 includes a sensing circuit 51 and a drive circuit 52.

(7) Configuration of First Electrode Layer and Second Electrode Layer

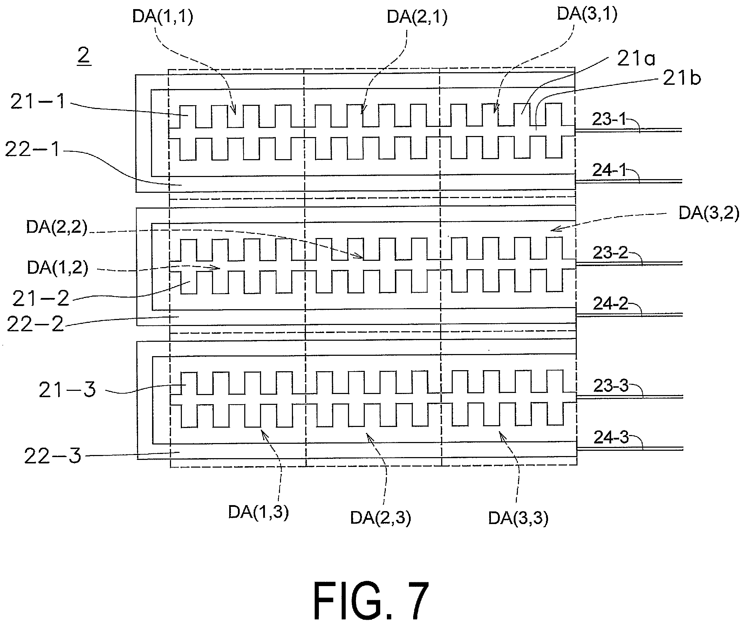

FIG. 7 illustrates the first electrode layer 2. When the first row electrodes 21 and the second row electrodes 22 are distinguished from each other depending on the location at which they are arranged, the first row electrode 21 and the second row electrode 22 are displayed with an indication of the row appended thereto. For example, a reference sign "-1" is appended to the first row electrode 21 and the second row electrode 22 in the first row. The first electrode layer 2 includes three pairs of first row electrodes 21-1 to 21-3 and second row electrodes 22-1 to 22-3 that extend over three columns and are insulated from each other, and three first row wiring lines 23-1 to 23-3 and three second row wiring lines 24-1 to 24-3 that connect the three pairs of the first row electrodes 21-1 to 21-3 and the second row electrodes 22-1 to 22-3 to the sensing circuit 51 of the detection circuit 5.

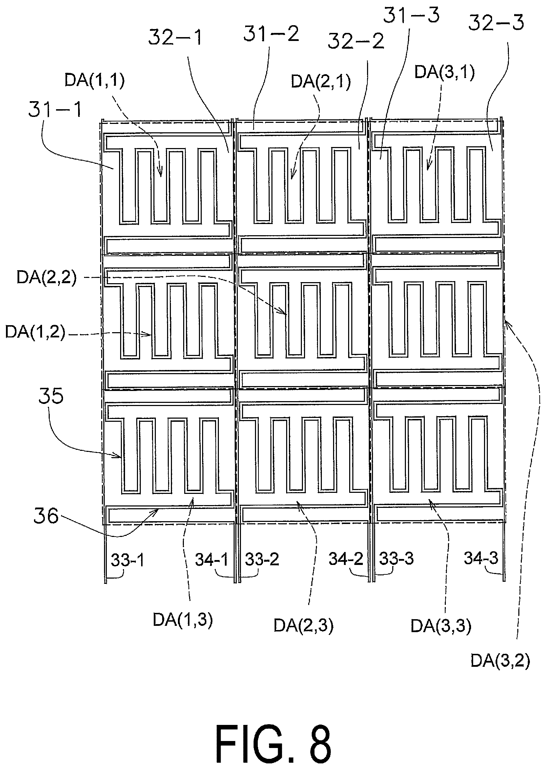

FIG. 8 illustrates the second electrode layer 3. When the first column electrodes 31 and the second column electrodes 32 are distinguished from each other depending on the location at which they are arranged, the first column electrode 31 and the second column electrode 32 are displayed with an indication of the column appended thereto. For example, a reference sign "-1" is appended to the first column electrode 31 and the second column electrode 32 in the first column. The second electrode layer 3 includes three pairs of first column electrodes 31-1 to 31-3 and second column electrodes 32-1 to 31-3 that extend over three rows and are insulated from each other, and three first column wiring lines 33-1 to 33-3 and three second column wiring lines 34-1 to 34-3 that connect the three pairs of the first column electrodes 31-1 to 31-3 and the second column electrodes 32-1 to 32-3 to the drive circuit 52 of the detection circuit 5.

(8) Detection of Stress by Detection Circuit

The drive circuit 52 of the detection circuit 5 drives the three pairs of the first column electrode 31 and the second column electrode 32 at different timings for each of the electrodes. For example, the drive circuit 52 first drives the first column electrode 31-1 and the second column electrode 32-1 in the first column, then drives the first column electrode 31-2 and the second column electrode 32-2 in the second column, and then drives the first column electrode 31-3 and the second column electrode 32-3 in the third column.

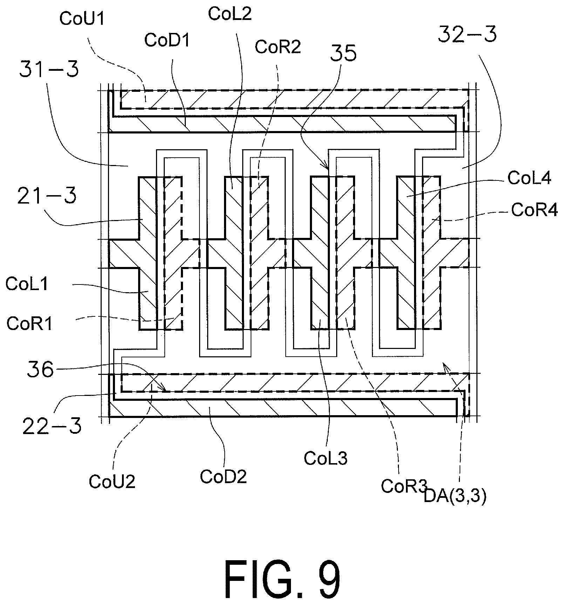

Of these, being able to calculate the shear stress will be described with reference to FIG. 9, when focusing attention on one of the detection areas DA. The drive electrodes contributing to the detection in the detection area DA of the third row and third column are illustrated in FIG. 9. In the detection area DA(3, 3) of the third row and third column, the first column electrode 31-3 and the second column electrode 32-3 are included as the drive electrodes, and the first row electrode 21-3 and the second row electrode 22-3 are included as the sensing electrodes.

Capacitors constituted by overlapping portions of the first row electrode 21 and the first column electrode 31 are four capacitors CoL1, CoL2, CoL3, and CoL4. Capacitors constituted by overlapping portions of the first row electrode 21 and the second column electrode 32 are four capacitors CoR1, CoR2, CoR3, and CoR4. Capacitors constituted by overlapping portions of the second row electrode 22 and the first column electrode 31 are two capacitors CoD1 and CoD2. Capacitors constituted by overlapping portions of the second row electrode 22 and the second column electrode 32 are two capacitors CoU1 and CoU2.

Each of the first row electrodes 21 overlaps the first grooves 35 at a plurality of locations (here, four locations) in each of the detection areas DA. Each of the second row electrodes 22 overlaps the second grooves 36 at a plurality of locations (here, two locations) in each of the detection areas DA. In each of the detection areas DA, since the first row electrode 21 and the first grooves 35 overlap each other at the plurality of locations, the overlapping locations are arranged over a wide range. Thus, the cross-axis interference is less likely to occur, compared to a case in which the overlapping location is at only one location. In each of the detection areas DA, since the second row electrode 22 and the second grooves 36 overlap each other at the plurality of locations, the overlapping locations are arranged over a wide range. Thus, the cross-axis interference is less likely to occur, compared to a case in which the overlapping location is at only one location.

The capacitors CoL1, CoL2, CoL3, and CoL4 in FIG. 9 of the second embodiment correspond to the capacitor CoL in FIG. 4 described in the first embodiment. That is, when the electrostatic capacitances of the capacitors CoL1, CoL2, CoL3, and CoL4 are denoted by CL1, CL2, CL3, and CL4, in Equations [2] and [3], $CL = CL1 + CL2 + CL3 + CL4$ can be substituted for CL. Thus, $CL_{BL}$ in Equations [2] and [3] is also given by $CL_{BL} = CL1_{BL} + CL2_{BL} + CL3_{BL} + CL4_{BL}$.

Similarly, the capacitors CoR1, CoR2, CoR3, and CoR4 in FIG. 9 of the second embodiment correspond to the capacitor CoR in FIG. 4 described in the first embodiment. That is, when the electrostatic capacitances of the capacitors CoR1, CoR2, CoR3, and CoR4 are denoted by CR1, CR2, CR3, and CR4, in Equations [2] and [3], $CR = CR1 + CR2 + CR3 + CR4$ can be substituted for CR. Thus, $CR_{BL}$ in Equations [2] and [3] is also given by $CR_{BL} = CR1_{BL} + CR2_{BL} + CR3_{BL} + CR4_{BL}$.

The capacitors CoU1 and CoU2 in FIG. 9 of the second embodiment correspond to the capacitor CoU in FIG. 4 described in the first embodiment. That is, when the electrostatic capacitances of the capacitors CoU1 and CoU2 are denoted by CU1 and CU2, in Equations [1] and [3], $CU = CU1 + CU2$ can be substituted for CU. Thus, $CU_{BL}$ in Equations [1] and [3] is also given by $CU_{BL} = CU1_{BL} + CU2_{BL}$.

The capacitors CoD1 and CoD2 in FIG. 9 of the second embodiment correspond to the capacitor CoD in FIG. 4 described in the first embodiment. That is, when the electrostatic capacitances of the capacitors CoD1 and CoD2 are denoted by CD1 and CD2, in Equations [1] and [3], $CD = CD1 + CD2$ can be substituted for CD. Thus, $CD_{BL}$ in equations [1] and [3] is also given by $CD_{BL} = CD1_{BL} + CD2_{BL}$.

In other words, the shear stresses F1 and F2 in the first direction and the second direction, and the compressive stress Fv in the direction perpendicular to the surface of the stress detection sheet 8 can be calculated using CL1 to CL4, $CL1_{BL}$ to $CL4_{BL}$, CR1 to CR4, $CR1_{BL}$ to $CR4_{BL}$, CU1 to CU2, $CU1_{BL}$ to $CU2_{BL}$, CD1 to CD2, and $CD1_{BL}$ to $CD2_{BL}$.

Although the detection area DA(3, 3) of the third row and third column has been described in the example in FIG. 9, the shear stresses F1 and F2 in the first direction and the second direction, and the compressive stress Fv in the direction perpendicular to the surface of the stress detection sheet 8 can also be calculated for each of the detection areas DA(M, N) of the M rows and the N columns, in the same manner as for the detection area DA(3, 3).

(9) Cross-sectional Configuration of Detection Sheet

FIG. 10 illustrates an overview of a basic cross-sectional configuration of the stress detection sheet 8 of the stress sensor 1 according to the second embodiment. The first electrode layer 2 is disposed on the insulating elastic body layer 4, and the second electrode layer 3 is disposed under the insulating elastic body layer 4. The first electrode layer 2 is bonded to the top surface of the insulating elastic body layer 4 using an adhesive 41, and the second electrode layer 3 is bonded to the lower surface of the insulating elastic body layer 4 using an adhesive 42. The adhesive 41 and the adhesive 42 are, for example, silicone-based adhesives. Examples of the silicone-based adhesive include a silicone rubber adhesive. Thicknesses of the adhesive layer 41 and the adhesive layer 42 are, for example, from 10 $\mu$m to 100 $\mu$m.

For example, a foam material is used as the elastically deformable material for the insulating elastic body layer 4. Examples of the material of the foam material include silicone rubber, urethane, and polyethylene. Examples of the material for which a compressive deformation is large include a material obtained by finely dispersing a gas in a resin and molding the resin into a foam or a porous shape. Examples of the material of the foam include silicone, urethane, polyethylene, and polystyrene. A thickness of the insulating elastic body layer 4 is appropriately selected from a range of 2 $\mu$m to 5 mm, for example. The protecting layer 71 and the insulating layer 73 are constituted by an insulating film. An elastically deformable material capable of dispersing pressure is preferably used for the protecting layer 71. The insulating film used for the protecting layer 71 and the insulating layer 73 is, for example, a silicone film. A thickness of the insulating film is 10 $\mu$m to 100 $\mu$m, for example.

In the stress detection sheet 8, the protecting layer 71, the conducting layer 72, the insulating layer 73, and the first electrode layer 2 are provided in this order from the top. The conducting layer 72 and the first electrode layer 2 are constituted by a conductive adhesive (conductive paste), for example. Here, the conducting layer 72 is provided on the protecting layer 71, but the conducting layer 72 and the first electrode layer 2 may be formed on both surfaces of the insulating layer 73, as illustrated in FIG. 5. By forming the conducting layer 72 and the first electrode layer 2 on both surfaces of the insulating layer 73, the stress detection sheet 8 can be made thinner. The conducting layer 72 is connected to the common potential GND in order to reduce the influence of an external electric field. The conductive paste constituting the conducting layer 72 and the first electrode layer 2 is a silver paste, for example. A thickness of the silver paste is selected from a range of 0.1 $\mu$m to 1 mm, for example. An adhesive 75 is disposed between the conducting layer 72 and the insulating layer 73. A thickness of the adhesive 75 is 10 $\mu$m to 100 $\mu$m, for example. A conducting layer 76 made of another conductive paste may be provided on the conducting layer 72. Alternatively, the conducting layer 76 may be omitted. By being printed with carbon ink, the conducting layer 76 can serve as both a design (a display of squares, for example) indicating element positions, and as a layer forming the common potential GND. In addition, durability can be improved by using the carbon ink. The conducting layer 76 may be formed between a silicone layer 71b and an adhesive 71c or between an insulating film 71a and the adhesive 71c.

The protecting layer 71 is a layer in which the insulating film 71a and the silicone layer 71b on the front surface of the protecting layer 71 are bonded by the adhesive 71c. The insulating film 71a is a silicone film, for example. A thickness of the insulating film 71a is 10 $\mu$m to 100 $\mu$m, for example. The silicone layer 71b on the front surface is a layer made of silicone and is 100 $\mu$m to 1 mm thick, for example. The silicone layer 71b that is the front surface of the protecting layer 71 can disperse pressure. The silicone layer 71b is an elastic layer having elastic properties that is disposed on the front surface, and overlaps the M $\times$ N detection areas DA. The silicone layer 71b can disperse the pressing force to suppress the cross-axis interference.

In the stress detection sheet 8, the protecting layer 81, the conducting layer 82, the insulating layer 83, and the second electrode layer 3 are provided in this order from the bottom. The protecting layer 81 and the insulating layer 83 are constituted by an insulating film, for example. As the protecting layer 81, for example, it is preferable to use a non-slip sheet having non-slip properties, made of a silicone-based resin, an acrylic resin, an acrylic silicone-based resin, or rubber. For example, a silicone film can be used as the protecting layer 81. The thickness of the protecting layer 81 is from 10 $\mu$m to 1 mm, for example. A silicone film provided on the back surface of the protecting layer 81 prevents the stress detection sheet 8 from slipping, and facilitates the measurement of the shear stress.

The insulating layer 83 is constituted by a resin film, for example. The resin film is a PET film, for example. The conducting layer 82 and the second electrode layer 3 are constituted by a conductive adhesive (conductive paste), for example. An adhesive 84 is disposed between the conducting layer 82 and the protecting layer 81. The adhesive 84 is, for example, a silicone-based adhesive. Examples of the silicone-based adhesive include a silicone rubber adhesive. A thickness of the adhesive 84 is 10 $\mu$m to 100 $\mu$m, for example. The conducting layer 82 is connected to the common potential GND in order to reduce the influence of an external electric field.

In the stress detection sheet 8 illustrated in FIG. 9, shielding layers 85 and 86 are provided under the conducting layer 82 and on the second electrode layer 3. The shielding layers 85 and 86 are constituted by insulating ink, for example.

The shielding layers 85 and 86 are layers provided for the purpose of improving the reliability of the conducting layer 82 and the second electrode layer 3 constituted by the silver paste, for example. The shielding layers 85 and 86 can prevent migration, sulfurization, or disconnection of the conducting layer 82 and the second electrode layer 3. The shielding layers 85 and 86 can be omitted.

The first row electrode 21 and the second row electrode 22, and the first row wiring line 23 and the second row wiring line 24 are made of the same member disposed on the same plane. In the second embodiment, the first row electrode 21 and the second row electrode 22, and the first row wiring line 23 and the second row wiring line 24 are simultaneously formed of the same member by printing of silver paste, for example. The first column electrode 31 and the second column electrode 32, and the first column wiring line 33 and the second column wiring line 34 are made of the same member disposed on the same plane. In the second embodiment, the first column electrode 31 and the second column electrode 32, and the first column wiring line 33 and the second column wiring line 34 are simultaneously formed of the same member by printing of silver paste, for example. By forming these components from the same member at the same time in this way, manufacturing is facilitated. Further, since the stress detection sheet 8 is made of the same members formed on the same planes, the thickness of the stress detection sheet 8 can be reduced.

Third Embodiment

(10) Overall Configuration of Detection Sheet

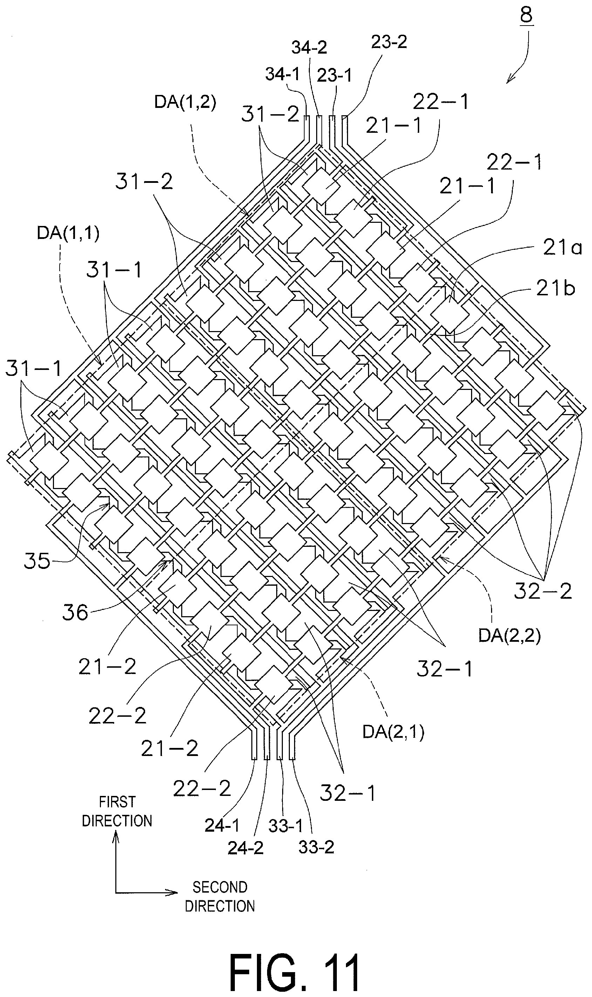

FIG. 11 illustrates an overview of a configuration of the stress detection sheet 8 of the stress sensor 1 according to a third embodiment. The stress detection sheet 8 illustrated in FIG. 11 has four of the detection areas DA for detecting the stress over two rows and two columns. For example, in the detection area DA(2, 2), the pressing force (compressive stress), the shear stress in the first direction, and the shear stress in the second direction can be detected in the second row and second column.

The stress detection sheet 8 according to the third embodiment differs from the stress detection sheet 8 according to the second embodiment in an in-plane arrangement pattern of the first row electrodes 21, the second row electrodes 22, the first column electrodes 31, and the second column electrodes 32. In the stress detection sheet 8 according to the third embodiment, the direction in which the first row electrodes 21 and the second row electrodes 22 extend and the direction in which the first column electrodes 31 and the second column electrodes 32 extend are not the first direction and the second direction, and the extending directions are inclined by 45 degrees with respect to the first direction and the second direction, respectively.

Further, the pairs of the first row electrode 21 and the second row electrode 22 according to the third embodiment are provided in sets of two, respectively. This differs from the second embodiment, in which the pairs of the first row electrode 21 and the second row electrode 22 are provided in the sets of one. The pairs of the first column electrode 31 and the second column electrode 32 according to the third embodiment are provided in sets of four, respectively. This differs from the second embodiment in which the pairs of the first column electrode 31 and the second column electrode 32 are provided in the sets of one.

(11) Characteristics

(11-1) The stress sensor 1 includes the first electrode layer 2, the second electrode layer 3, the insulating elastic body layer 4, and the detection circuit 5. By providing the M first row wiring lines 23 and the M second row wiring lines 24 of the first electrode layer 2 and the N first column wiring lines 33 and the N second column wiring lines 34 of the first electrode layer 2, it is possible to perform wiring that can detect the shear stress in the first direction and the second direction and detect the compressive stress over the M rows and the N columns. For example, the stress detection sheet 8 of the stress sensor 1 over the two rows and two columns illustrated in FIGS. 2 and 11 includes the two first row wiring lines 23 and the two second row wiring lines 24 of the first electrode layer 2 and the two first column wiring lines 33 and the two second column wiring lines 34. The stress detection sheet 8 of the stress sensor 1 over the three rows and three columns illustrated in FIG. 6 includes the three first row wiring lines 23 and the three second row wiring lines 24 of the first electrode layer 2, and the three first column wiring lines 33 and the three second column wiring lines 34.

On the other hand, in a detection sheet 900, illustrated in FIG. 16, of a known stress sensor capable of detecting the shear stress in an X direction and the shear stress in a Y direction over two rows and two columns, two wiring lines for connection to first strip-shaped electrodes 910, two wiring lines for connection to second strip-shaped electrodes 920, and nine wiring lines for connection to segment electrodes 930 are required.

As can be seen from a comparison with the detection sheet 900 of the known stress sensor illustrated in FIG. 16, the stress sensor 1 according to the present invention can significantly reduce the number of wiring lines for connecting the first electrode layer 2 and the second electrode layer 3 to the detection circuit 5.

In the stress sensor 1, as in the first electrode layer 2 and the second electrode layer 3, it is possible to connect the first row electrode 21 and the second row electrode 22 formed on the same plane, and the first column electrode 31 and the second column electrode 32 formed on the same plane, to the first row wiring line 23 and the second row wiring line 24, and to the first column wiring line 33 and the second column wiring line 34, respectively, in each row and in each column. Therefore, even when the size of the stress detection sheet 8 is increased while maintaining the detection resolution, the number of the first row wiring lines 23 and the second row wiring lines 24 and the number of the first column wiring lines 33 and the second column wiring lines 34 of the stress sensor 1 can be reduced.

Further, since the first column electrodes 31 and the second column electrodes 32 are on the same plane, and the first column wiring lines 33 and the second column wiring lines 34 are on the same plane, a flexible wiring substrate 940, as in the known art, is not required for the configuration of the stress sensor 1.

(11-2) For example, in the first electrode layer 2 according to the second embodiment described with reference to FIG. 7, the first row electrode 21 and the second row electrode 22, and the first row wiring line 23 and the second row wiring line 24 are made of the same member disposed on the same plane. In the second electrode layer 3 according to the second embodiment described with reference to FIG. 8, the first column electrode 31 and the second column electrode 32, and the first column wiring line 33 and the second column wiring line 34 are made of the same member disposed on the same plane. For example, the first row electrode 21 and the second row electrode 22, and the first row wiring line 23 and the second row wiring line 24 are simultaneously formed by silver paste in one printing process. Similarly, the first column electrode 31 and the second column electrode 32, and the first column wiring line 33 and the second column wiring line 34 are simultaneously formed by silver paste in one printing process, for example.

The stress detection sheet 8 including the first row electrode 21 and the second row electrode 22, the first row wiring line 23 and the second row wiring line 24, the first column electrode 31 and the second column electrode 32, and the first column wiring line 33 and the second column wiring line 34 configured as described above can be made thinner than the known detection sheet 900 illustrated in FIG. 12, for example.

In the known art, as illustrated in FIG. 12, since a distance between the first strip electrodes 910 and the segment electrodes 930 is different from a distance between the second strip electrodes 920 and the segment electrodes 930, there is a difference in the detection sensitivity between the shear stress in the X direction and the shear stress in the Y direction. On the other hand, for example, since the shear stress in the first direction and the shear stress in the second direction are detected using the first row electrode 21 and the second row electrode 22 arranged on the same plane and the first column electrode 31 and the second column electrode 32 arranged on the same plane, it is possible to eliminate the difference in the detection sensitivity between the shear stress in one direction and the shear stress in two directions.

(11-3) In each of the first row electrodes 21 described with reference to FIG. 4, 7, or 11, the connection portion 21b between the stress detection portions 21a adjacent to each other is thinner than a plurality of stress detection portions overlapping the first grooves 35. As a result, the stress sensor 1 can suppress the cross-axis interference, compared to a case in which the connection portion 21b is not thinner.

(11-4) Each of the first row electrodes 21 illustrated in FIG. 6 or 11 overlaps the first grooves 35 at the plurality of locations in each of the detection areas DA. As a result, in the stress sensor 1, the overlapping locations are arranged over a wide range, compared to a case in which the first row electrode 21 and the first groove 35 overlap each other at only one location. Thus, the cross-axis interference is less likely to occur.

(11-5) Each of the second row electrodes 22 illustrated in FIG. 6 or 11 overlaps the second grooves 36 at the plurality of locations in each of the detection areas DA. As a result, in the stress sensor 1, since the overlapping locations are arranged over a wide range, compared to a case in which the second row electrode 22 and the second groove 36 overlap each other at only one location. Thus, the cross-axis interference is less likely to occur.

(11-6) As illustrated in FIG. 10, the stress sensor 1 according to the second embodiment includes the silicone layer 71b, which is the elastic layer having elasticity. The silicone layer 71b overlaps the $M \times N$ ($3 \times 3$ in the second embodiment) detection areas DA on the stress detection sheet 8. As a result, in the stress sensor 1, the stress is dispersed by the silicone layer 71b, which is the elastic layer, and thus, the cross-axis interference is less likely to occur.

(11-7) As illustrated in FIG. 10, on the back surface of the stress sensor 1 according to the second embodiment, the protecting layer 81 constituted by the silicone film overlaps the $M \times N$ ($3 \times 3$ in the second embodiment) detection areas DA. As a result, in the stress sensor 1, the stress detection sheet 8 including the detection areas DA does not slide due to the silicone film on the back surface, and the shear stress is easily measured.

(12) Modified Examples

(12-1) Modified Example A

In each of the embodiments described above, the first electrode layer 2 is constituted by the single conducting layer (for example, a layer made of one layer of silver paste) including the first row electrode 21 and the second row electrode 22, and the first row wiring line 23 and the second row wiring line 24. However, the first row electrode 21 and the second row electrode 22, and the first row wiring line 23 and the second row wiring line 24 of the first electrode layer 2 may be formed using a plurality of conducting layers. For example, the first row electrode 21 and the second row electrode 22, and the first row wiring line 23 and the second row wiring line 24 may be formed in different conducting layers.

In addition, in each of the embodiments described above, the second electrode layer 3 is constituted by the single conducting layer (for example, a layer made of one layer of silver paste) including the first column electrode 31 and the second column electrode 32, and the first column wiring line 33 and the second column wiring line 34. However, the first column electrode 31 and the second column electrode 32, and the first column wiring line 33 and the second column wiring line 34 of the second electrode layer 3 may be formed using a plurality of conducting layers. For example, the first column electrode 31 and the second column electrode 32, and the first column wiring line 33 and the second column wiring line 34 may be formed in different conducting layers.

(12-2) Modified Example B

In each of the embodiments described above, the case has been described in which the conducting layers of the first electrode layer 2 and the second electrode layer 3 are formed using the conductive paste (conductive adhesive). However, these conducting layers may be formed by another method. For example, the conducting layer may be formed by depositing a thin metal film or by etching a thin metal film.

(12-3) Modified Example C

In the embodiments described above, the stress detection sheet 8 and the detection circuit 5 are connected to each other. However, the stress detection sheet 8 may be separable from the detection circuit 5. For example, the stress detection sheet 8 may be replaceable, as a consumable.

Further, the detection circuit 5 may be compatible with a plurality of types of the stress detection sheet 8 that have different numbers of wiring lines of the first row wiring lines 23, the second row wiring lines 24, the first column wiring lines 33, and the second column wiring lines 34, have different numbers of electrodes of the first row electrodes 21, the second row electrodes 22, the first column electrodes 31, and the second column electrodes 32, or have different arrangements thereof. For example, the detection circuit 5 may include a memory (not illustrated). The number of wiring lines, a constant, and a program for detection may be stored in the memory for each of the types of the stress detection sheet 8, and the stress detection operation may be performed according to the different programs. By configuring the detection circuit 5 to be compatible with the plurality of types of the stress detection sheet 8 in this way, for example, it is possible to detect the stress by replacing the stress detection sheet 8 with the appropriate stress detection sheet 8 that matches the shape and situation of the detection target.

Reference Signs List

1 Stress sensor
2 First electrode layer
3 Second electrode layer
4 Insulating elastic body layer
5 Detection circuit
8 Detection sheet
21 First row electrode
21a Stress detection portion
22 Second row electrode
23 First row wiring line
24 Second row wiring line
31 First column electrode
32 Second column electrode
33 First column wiring line
34 Second column wiring line
35 First groove
36 Second groove
71b Silicone layer

81 Protecting layer
DA Detection area

**Claims**

1. A stress sensor comprising:

   a first electrode layer and a second electrode layer provided overlapping M × N detection areas for performing detection separately in M rows and N columns (M and N being integers equal to or greater than 2), the first electrode layer and the second electrode layer facing each other;
   an insulating elastic body layer disposed between the first electrode layer and the second electrode layer, the insulating elastic body layer being configured to electrically insulate the first electrode layer and the second electrode layer from each other, and being made of an elastically deformable material; and
   a detection circuit connected to the first electrode layer and the second electrode layer, wherein
   the first electrode layer includes
   M pairs of first row electrodes and second row electrodes, the first row electrodes and the second row electrodes extending over the N columns and being insulated from each other, and
   M first row wiring lines and M second row wiring lines connecting the M pairs of the first row electrodes and the second row electrodes to the detection circuit,
   the second electrode layer includes
   N pairs of first column electrodes and second column electrodes, the first column electrodes and the second column electrodes extending over the M rows and being insulated from each other, and
   N first column wiring lines and N second column wiring lines connecting the N pairs of the first column electrodes and the second column electrodes to the detection circuit,
   between the first column electrode and the second column electrode in each pair, the second electrode layer includes M first grooves extending in a first direction, and M second grooves extending in a second direction intersecting the first direction in each row,
   the first row electrode in each pair is arranged overlapping the first grooves in the N columns,
   the second row electrode in each pair is arranged overlapping the second grooves in the N columns, and
   the detection circuit is configured to, by driving the N pairs of the first column electrodes and the second column electrodes at different timings for each electrode,
   detect a shear stress orthogonal to the first direction in the first grooves arranged in the M rows and the N columns,
   detect a shear stress orthogonal to the second direction in the second grooves arranged in the M rows and the N columns, and
   detect a pressing force in the M rows and N columns at which the M pairs of the first row electrodes and the second row electrodes and the N pairs of the first column electrodes and the second column electrodes intersect each other.

2. The stress sensor according to claim 1, wherein

   the first row electrodes and the second row electrodes, and the first row wiring lines and the second row wiring lines are made of the same member disposed on the same plane, and
   the first column electrodes and the second column electrodes, and the first column wiring lines and the second column wiring lines are made of the same member disposed on the same plane.

3. The stress sensor according to claim 1 or 2, wherein
   in each of the first row electrodes, compared to a plurality of stress detection portions overlapping the first grooves, a connection portion between the stress detection portions adjacent to each other is thinner.

4. The stress sensor according to claim 1 or 2, wherein
   in each of the detection areas, each of the first row electrodes is configured to overlap the first grooves at a plurality of locations.

5. The stress sensor according to claim 1 or 2, wherein
   in each of the detection areas, each of the second row electrodes is configured to overlap the second grooves at a plurality of locations.

6. The stress sensor according to claim 1 or 2, comprising
an elastic layer on a front surface, the elastic layer having elasticity and overlapping the M × N detection areas.

7. The stress sensor according to claim 1 or 2, comprising
a silicone film on a back surface, the silicone film overlapping the M × N detection areas.

8. A stress detection sheet comprising:

a first electrode layer and a second electrode layer provided overlapping M × N detection areas for performing detection separately in M rows and N columns (M and N being integers equal to or greater than 2), the first electrode layer and the second electrode layer facing each other; and

an insulating elastic body layer disposed between the first electrode layer and the second electrode layer, the insulating elastic body layer being configured to electrically insulate the first electrode layer and the second electrode layer from each other, and being made of an elastically deformable material, wherein

the first electrode layer includes

M pairs of first row electrodes and second row electrodes, the first row electrodes and the second row electrodes extending over the N columns and being insulated from each other, and

M first row wiring lines and M second row wiring lines for connecting the M pairs of the first row electrodes and the second row electrodes to a circuit outside the stress detection sheet,

the second electrode layer includes

N pairs of first column electrodes and second column electrodes, the first column electrodes and the second column electrodes extending over the M rows and being insulated from each other, and

N first column wiring lines and N second column wiring lines for connecting the N pairs of the first column electrodes and the second column electrodes to the circuit outside the stress detection sheet,

between the first column electrode and the second column electrode in each pair, the second electrode layer includes M first grooves extending in a first direction, and M second grooves extending in a second direction intersecting the first direction in each row,

the first row electrode in each pair is arranged overlapping the first grooves in the N columns, and

the second row electrode in each pair is arranged overlapping the second grooves in the N columns.

FIG. 1

EP 4 585 892 A1

FIG. 2

EP 4 585 892 A1

ST1

DRIVE FIRST COLUMN ELECTRODE 31 IN FIRST COLUMN

ST2

USE FIRST ROW ELECTRODE 21 AND SECOND ROW ELECTRODE 22 TO MEASURE ELECTROSTATIC CAPACITANCE WITH FIRST COLUMN ELECTRODE 31 IN FIRST COLUMN

ST3

DRIVE SECOND COLUMN ELECTRODE 32 IN FIRST COLUMN

ST4

USE FIRST ROW ELECTRODE 21 AND SECOND ROW ELECTRODE 22 TO MEASURE ELECTROSTATIC CAPACITANCE WITH SECOND COLUMN ELECTRODE 32 IN FIRST COLUMN

ST5

DRIVE FIRST COLUMN ELECTRODE 31 IN SECOND COLUMN

ST6

USE FIRST ROW ELECTRODE 21 AND SECOND ROW ELECTRODE 22 TO MEASURE ELECTROSTATIC CAPACITANCE WITH FIRST COLUMN ELECTRODE 31 IN SECOND COLUMN

ST7

DRIVE SECOND COLUMN ELECTRODE 32 IN SECOND COLUMN

ST8

USE FIRST ROW ELECTRODE 21 AND SECOND ROW ELECTRODE 22 TO MEASURE ELECTROSTATIC CAPACITANCE WITH SECOND COLUMN ELECTRODE 32 IN SECOND COLUMN

# FIG. 3

18

FIRST
DIRECTION

SECOND
DIRECTION

# FIG. 4

FIG. 5

FIG. 6

EP 4 585 892 A1

FIG. 7

EP 4 585 892 A1

FIG. 8

**FIG. 9**

FIG. 10

FIG. 11

900

981

GND

972 — 910

971

960 — 920

— 930

940 — 945

— 950

973

GND

982

# FIG. 12

910

α1
α2
α3

αj-2
αj-1
αj

# FIG. 13

βk-1
βk   βk-2          β2
                  β3   β1

920

# FIG. 14

γ(1,1)

930

γ(1,k)

γ(j,1)

γ(j,k)

## FIG. 15

FIG. 16

## INTERNATIONAL SEARCH REPORT

| | International application No. |
|---|---|
| | **PCT/JP2023/040782** |

**A.     CLASSIFICATION OF SUBJECT MATTER**

*G01L 5/165*(2020.01)i; *G01L 1/14*(2006.01)i; *G01L 5/00*(2006.01)i
FI:     G01L5/165; G01L5/00 101Z; G01L1/14 J

According to International Patent Classification (IPC) or to both national classification and IPC

**B.     FIELDS SEARCHED**

Minimum documentation searched (classification system followed by classification symbols)

G01L 5/165; G01L 5/00; G01L 1/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| X | WO 2018/012033 A1 (ALPS ELECTRIC CO., LTD.) 18 January 2018 (2018-01-18) paragraphs [0029]-[0135], fig. 6, 9-12 | 1-3, 6, 8 |
| Y | | 7 |
| A | | 4-5 |
| Y | JP 2008-82947 A (HIROSHIMA UNIVERSITY) 10 April 2008 (2008-04-10) paragraph [0015], fig. 1 | 7 |
| A | US 2017/0176266 A1 (FEETME) 22 June 2017 (2017-06-22) | 1-8 |
| A | JP 2019-120676 A (INDUSTRIAL TECHNOLOGY RESEARCH INSTITUTE) 22 July 2019 (2019-07-22) | 1-8 |
| A | JP 2022-111489 A (HONDA MOTOR CO., LTD.) 01 August 2022 (2022-08-01) | 1-8 |

☐ Further documents are listed in the continuation of Box C.       ☑ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **30 November 2023** | **12 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/040782**

| Patent document cited in search report | | | Publication date (day/month/year) | Patent family member(s) | | | Publication date (day/month/year) |
|---|---|---|---|---|---|---|---|
| WO | 2018/012033 | A1 | 18 January 2018 | (Family: none) | | | |
| JP | 2008-82947 | A | 10 April 2008 | (Family: none) | | | |
| US | 2017/0176266 | A1 | 22 June 2017 | WO | 2016/009151 | A1 | |
| | | | | EP | 3169983 | A1 | |
| | | | | FR | 3023914 | A1 | |
| | | | | ES | 2799827 | T3 | |
| JP | 2019-120676 | A | 22 July 2019 | US | 2019/0212860 | A1 | |
| | | | | CN | 110006559 | A | |
| | | | | TW | 201930840 | A | |
| JP | 2022-111489 | A | 01 August 2022 | US | 2022/0228937 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6699954 B